# EUROPÄISCHE PATENTSCHRIFT

(11) **EP 3 227 637 B1**
(45) Veröffentlichungstag und Bekanntmachung des Hinweises auf die Patenterteilung: **08.09.2021**
(21) Anmeldenummer: 15771583.0
(22) Anmeldetag: 29.09.2015
(51) Int. Cl.: G01C 21/36

(54) **VERFAHREN ZUR ERKENNUNG EINES ZIELES EINER PERSON UND ZIELERKENNUNGSEINHEIT HIERZU**
METHOD FOR RECOGNIZING THE DESTINATION OF A PERSON AND DESTINATION RECOGNITION UNIT THEREFOR
MÉTHODE POUR RECONNAÎTRE LA DESTINATION D'UNE PERSONNE ET DISPOSITIF PERTINENT

(30) Priorität: 02.12.2014 DE 102014224583
(43) Veröffentlichungstag der Anmeldung: 11.10.2017
(73) Patentinhaber: Robert Bosch GmbH, 70442 Stuttgart (DE)
(72) Erfinder: VOGEL, Andreas, 31139 Hildesheim (DE); KRYKUNOVA, Kateryna, 31137 Hildesheim (DE)
(86) Internationale Anmeldenummer: PCT/EP2015/072329
(87) Internationale Veröffentlichungsnummer: WO 2016/087077

(56) Entgegenhaltungen:
- WO-A1-2014/108232
- US-A1- 2006 238 409
- None

## Beschreibung

Die Erfindung betrifft ein Verfahren zur Bestimmung eines Zieles einer Person mittels einer Zielerkennungseinheit, wobei die Bestimmung auf einer Wahrscheinlichkeit beruht, mit der die Person das Ziel ansteuert, weiterhin betrifft die Erfindung eine Zielerkennungseinheit zur Ausführung der Verfahrens.

### STAND DER TECHNIK

Die DE 10 2006 030 269 A1 beschreibt ein Verfahren zur Bestimmung eines Zieles eines Fahrzeugs mit einem Navigationssystem, das als Zielerkennungseinheit dienen kann, und die Bestimmung eines Ziels beruht auf einer Wahrscheinlichkeit, mit der ein Fahrer des Fahrzeugs das Ziel anfährt. Die US 2006/238409 A1 offenbart eine Vorrichtung zur Zielvorhersage aus von einem Benutzer mitgeführten Gegenständen. Die WO 2014/108232 A1 offenbart eine wahrscheinlichkeitsbasierte Bereitstellung von Navigationszielen. Moderne Navigationssysteme begleiten einen Fahrer auf einer Fahrt auch dann, wenn dieser die Fahrtroute kennt und das Navigationssystem nicht aktiviert hat. Beispielsweise können aktuelle Verkehrsmeldungen erfasst werden, um einen Fahrer auch ohne aktive Zielführung auf die Meldungen hinzuweisen und eine alternative Fahrtroute vorzuschlagen. Navigationssysteme mit derart erweiterten Funktionen nutzen auch angelernte Verhaltensweisen eines Fahrers, die beispielsweise abhängig sein können von einem Wochentag oder einer Uhrzeit. Derartige Verhaltensweisen werden basierend auf einem heuristischen Algorithmus analysiert und ein wahrscheinliches Ziel wird bestimmt. Dabei spielt das Anlernen des Systems eine immer größere Rolle.

Insbesondere mit größer werdendem Speicherplatz in elektronischen Systemen, beispielsweise in Navigationssystemen und speziell in Zielerkennungseinheiten, spielt das Anlernen in modernen Navigationssystemen eine immer größere Rolle. So will man das typische Verhalten eines Fahrers bestimmen, wie er beschleunigt, wie er bremst, welche Vorlieben er während der Fahrt hat und insbesondere welche Strecken der Fahrer bevorzugt, um ein Ziel zu erreichen.

Ein großer Teilaspekt des Anlernens solcher Systeme besteht darin, dass die gefahrenen Routen aufgezeichnet werden, damit über die Zeit das Verhalten des Fahrers gelernt wird. Es ist bekannt, dass der überwiegende Teil aller Fahrten reine Routinefahrten sind, beispielsweise zur Arbeit, zum Einkaufen, zum Sport, oder beispielsweise um die Kinder in den Kindergarten oder in die Schule zu fahren. Bei diesen Fahrten wird normalerweise keine Zielführung gestartet, da der Fahrer die Strecke sehr gut kennt.

Das Anlernen besteht dabei darin, beispielsweise aus der Uhrzeit des Fahrtbeginns und dem Wochentag und dem bisher zurückgelegten Weg zu erraten, wohin die Fahrt gehen soll. Je weiter die Fahrt fortgeschritten ist, desto genauer kann das Ziel bestimmt werden. Folglich steigt die Wahrscheinlichkeit, dass das System das Ziel richtig erkennt.

Ziel der vorliegenden Erfindung ist dabei, frühzeitig die Wahrscheinlichkeit weiter zu erhöhen, mit der das Ziel richtig bestimmt wird. Ein Nachteil bisheriger Verfahren besteht jedoch darin, dass das wahrscheinlichste Ziel manchmal nur sehr spät, das heißt bei weit fortgeschrittener Fahrt, erkannt werden kann. Man denke beispielsweise an ein Wohngebiet am Rande einer Stadt, und in diesem Fall beginnen alle Fahrten erst mit der Ausfahrt aus dem Wohngebiet. Auch der Fahrtbeginn bringt dabei häufig keine weitere Erkenntnis, da aus der Uhrzeit manchmal nicht abgeleitet werden kann, ob erst ein Kind zu einer Schule gefahren werden soll und erst danach wird ein regelmäßiges Ziel angefahren, beispielsweise eine Arbeitsstätte. Manchmal geht es aber auch erst beispielsweise zu einem Einkaufsmarkt, wobei beide Fahrten zu einem gleichen Zeitpunkt starten können. Eine Bestimmung eines Ziels mit einer gewissen Wahrscheinlichkeit ist daher nur sehr begrenzt möglich. Mit der Erfindung soll diese Wahrscheinlichkeit erhöht werden.

### OFFENBARUNG DER ERFINDUNG

Aufgabe der Erfindung ist die Weiterbildung eines Verfahrens zur Bestimmung eines Zieles einer Person mittels einer Zielerkennungseinheit, wobei die Richtigkeit der Bestimmung des Zieles mit einer möglichst hohen Wahrscheinlichkeit vorgenommen werden soll.

Diese Aufgabe wird ausgehend von einem Verfahren gemäß Anspruch 1 in Verbindung mit den kennzeichnenden Merkmalen gelöst. Weiterhin wird die Aufgabe gelöst mit einer Zielerkennungseinheit gemäß Anspruch 10. Vorteilhafte Weiterbildungen der Erfindung sind in den abhängigen Ansprüchen angegeben.

Die Erfindung schließt die Lehre ein, dass das Verfahren zur Bestimmung eines Zieles wenigstens die folgenden Schritte aufweist: Erkennen wenigstens eines durch die Person mitgeführten Gegenstandes, Bestimmen des wahrscheinlichen Zieles aus dem wenigstens einen erkannten Gegenstand.

Die Grundidee des erfindungsgemäßen Verfahrens besteht darin, dass eine Person, beispielsweise ein Fahrer bei einer Fahrt zu einem bestimmten Ziel immer die gleichen Gegenstände in seinem Fahrzeug mitnimmt. Beispielsweise kann bei einer Fahrt zur Arbeitsstätte immer ein Werksausweis mitgeführt werden, der durch die Zielerkennungseinheit erkannt wird. Bei der Fahrt zum Einkaufen in einem immer gleichen Einkaufsmarkt wird beispielsweise ein Einkaufskorb im Fahrzeug mitgeführt, bei einer Fahrt zum Sport wird eine Sporttasche mitgeführt, usw.

Dieser Prozess wird auch einem Lernprozess zugeführt, so dass durch die Zielerkennungseinheit regelmäßig erfasste Gegenstände bei einem erstmaligen Erkennen, beispielsweise wenn bei Fahrt mit einem Fahrzeug das Fahrzeug noch steht, diese aber nach Fahrtantritt regelmäßig nicht mehr im Fahrzeug vorhanden sind, von vornherein ausschließen kann.

Die Person muss sich dabei nicht zwingend mit einem Fahrzeug fortbewegen, und im vorliegenden Sinne kann die Person auch Gepäck mitführen, in dem die Gegenstände mitgeführt werden oder die Person führt die Gegenstände unmittelbar mit sich. Vereinfachend wird im Folgenden das Mitführen der Gegenstände in einem Fahrzeug angegeben, mit dem die Person eine Fahrt antritt, wobei die beispielshaft nachfolgend mit einem Fahrzeug beschriebene Fahrt genauso gut auch eine Fortbewegung zu Fuß, mit einem Fahrrad, mit einem öffentlichen Verkehrsmittel oder dergleichen sein kann, ohne damit den Schutzbereich der Erfindung zu verlassen.

Erfasst also die Zielerkennungseinheit solche mitgeführten Gegenstände, so kann aus dem Vorhandensein der Gegenstände, beispielsweise im Fahrzeug, ein wahrscheinliches Ziel durch die Zielerkennungseinheit bestimmt werden. Die Wahrscheinlichkeit, dass die Person das Ziel ansteuert, ist basierend auf den mitgeführten Gegenständen nämlich besonders hoch.

Ein wesentlicher Aspekt des erfindungsgemäßen Verfahrens betrifft das Anlernen des Zusammenhangs zwischen einem wahrscheinlichen Ziel und wenigstens einem im Fahrzeug mitgeführten Gegenstand, insbesondere mit einem neuen Gegenstand. In der Lernphase ordnet die Zielerkennungseinheit also den Gegenständen im Fahrzeug ein bestimmtes Ziel zu, das bei Mitführen der Gegenstände häufig oder immer angefahren wird. Dieser Lernprozess kann während jeder Fahrt stattfinden. Zu Beginn einer Fahrt startet die Zielerkennungseinheit mit der Erkennung der Gegenstände im Fahrzeug. Am Ende der Fahrt, also wenn das Ziel erreicht ist, wird die Zielerkennungseinheit darüber informiert, welche Gegenstände sich noch im Fahrzeug befinden. Das Ziel kann dabei auch ein Zwischenziel einer Fahrt sein, beispielsweise kann die routinemäßige Nutzung eines Fahrzeugs eine Route mit mehreren Zwischenzielen sein, wobei die Route wieder am Startpunkt enden kann. Hat die Zielerkennungseinheit die noch im Fahrzeug verbliebenen Gegenstände erfasst, kann die Zielerkennungseinheit ein Ziel mit einem Gegenstand in Verbindung bringen. Beispielsweise, wenn ein Einkaufsmarkt angefahren wird, wird der Einkaufskorb entnommen, was durch die Zielerkennungseinheit im daraufhin hergestellten Zusammenhang abgespeichert wird. Gleiches gilt beispielsweise bei der Entnahme eines Werksausweises, wenn der Fahrer das Fahrzeug mit dem Ausweis verlässt, so kann darauf geschlossen werden, dass es sich bei dem Ziel um die Arbeitsstätte des Fahrers handelt.

Das Verfahren umfasst weiterhin das Bereitstellen eines Navigationssystems, wobei die Bestimmung des wahrscheinlichen Ziels durch eine Interaktion der Zielerkennungseinheit mit dem Navigationssystem erfolgt. Beispielsweise können die Ziel-Hypothesen durch die Zielerkennungseinheit mittels CAN-Bussystemen oder anderen Übertragungswegen an das Navigationssystem übertragen werden, vorzugsweise aufgelistet in einer Prioritätsliste, wobei das wahrscheinlichste Ziel z.B. zuerst angezeigt wird. Das Navigationssystem kann wiederum an die Zielerkennungseinheit eine aktuelle geographische Position übermitteln.

Hat die Zielerkennungseinheit ein wahrscheinliches Ziel an das Navigationssystem übermittelt, so kann das Navigationssystem die Fahrt zum wahrscheinlichen Ziel mit Informationen an den Fahrer begleiten. Beispielsweise kann das Navigationsgerät vorausliegende Verkehrsbehinderungen oder dergleichen anzeigen, und es können an den Fahrer alternative Routen ausgegeben werden. Insbesondere kann durch das Navigationssystem mit einer entsprechenden Anzeige-Eingabe-Schnittstelle dem Fahrer das wahrscheinliche Ziel angezeigt werden, welches der Fahrer auf einfache Weise, beispielsweise per einmaligem Fingerdruck auf die Schnittstelle, quittieren kann. Dabei können durch die Zielerkennungseinheit auch mehrere wahrscheinliche Ziele zur Auswahl angezeigt werden, aus denen der Fahrer, insbesondere auch mit einer möglichen Reihenfolge, mit der der Fahrer die Ziele nacheinander anfahren will, quittieren kann.

Gemäß eines weiteren wichtigen Aspektes des Verfahrens kann das Erkennen des wenigstens einen im Fahrzeug mitgeführten Gegenstandes mittels einer Abfrage eines RFID-Elementes im oder am Gegenstand oder mittels einer Kamera erfolgen, wobei die Abfrage wenigstens ein- und vorzugsweise mehrfach ausgeführt wird, insbesondere wenn der Fahrer die Fahrt bereits angetreten hat. Damit kann ausgeschlossen werden, dass auch nicht sich im Fahrzeug befindende Gegenstände versehentlich durch die Zielerkennungseinheit mit erfasst werden. Die Zielerkennungseinheit kann ein Lesegerät umfassen, mit dem die RFID-Elemente, die sogenannte Transponder bilden, erfasst werden können. Dabei werden tatsächlich nicht die Gegenstände als solche erfasst, sondern es werden die den Gegenständen vorher typischerweise zugeordneten Kennungen erfasst, und jeder Gegenstand, beispielsweise der Firmenausweis, die Sporttasche, der Einkaufskorb und dergleichen, weisen jeweils zugeordnete typische Kennungen auf. Durch das Lesegerät kann folglich erfasst werden, welche Gegenstände sich im Fahrzeug befinden, und die Zielerkennungseinheit bestimmt daraus, basierend auf einer entsprechenden Heuristik, ein wahrscheinliches Ziel oder eine Abfolge wahrscheinlicher, hintereinander anzufahrender Ziele. Das Erkennen von Gegenständen in einem Fahrzeug basierend auf einer RFID-Technologie ist beispielsweise in der DE 10 2008 063 377 A1 beschrieben.

Mit weiterem Vorteil kann die Bestimmung des wahrscheinlichen Zieles das Erfassen wenigstens einer wegbegleitenden Person einschließen. Diese muss dabei nicht zwangsläufig einen Transponder tragen, beispielsweise in Form eines RFID-Elementes, sondern es sind mit Bezug auf Fahrzeuge beispielsweise Sitzerkennungssysteme in Fahrzeugen bekannt, durch die das Mitführen eines Insassen erkannt werden kann. Beispielsweise besteht auch die Möglichkeit, über eine Gesichts- oder Stimmenerkennung Personen zu identifizieren, und es kann eine Wahrscheinlichkeit angenommen werden, mit der die entsprechende Person an ein zuvor angelerntes Ziel gefahren wird. Dabei ist es auch denkbar, dass die weitere Person auch ein Zielvorhersagegerät mit sich tragen könnte. Damit könnten das eigene Gerät und das der weiteren Person untereinander kommunizieren und sich über mögliche Ziele austauschen. Durch die Kombination der beiden Ziele können wahrscheinlichste Ziele ermittelt werden. Dabei kann die Kombination von der einfachen Übernahme der Fremdziele, z.B. typisch für einen Taxifahrer, der nur nach den Wünschen seiner Gäste fährt bis hin zur Durchschnittsbildung der Ziele reichen.

Befinden sich neben der eigentlichen Person weitere Personen auf der Route, beispielsweise Insassen in einem Fahrzeug, so kann weiterführend auch eine Kombination der Ziele der weiteren Person mit den eigenen Zielen vorgesehen werden und entsprechende Informationen über die Route können unter Berücksichtigung der weiteren Gegenstände und/oder Personen bereitgestellt werden.

Mit weiterem Vorteil kann das Anlernen von wahrscheinlichen Zielen Zwischenziele umfassen, die auf oder innerhalb der Fahrtroute liegen. Das Anlernen von wahrscheinlichen Zielen und insbesondere von Zwischenzielen basiert darauf, dass mit der Entnahme eines Gegenstandes aus dem Fahrzeug ein Ziel oder ein Zwischenziel verknüpft und in einem Speicher abgespeichert wird. Das Gleiche gilt, wenn ein zuvor erfasster Fahrzeuginsasse das Fahrzeug verlässt.

Weiterhin besteht die Möglichkeit, dass das Bestimmen eines Ziels auf der Kombination mehrerer Gegenstände und/oder auf der Kombination wenigstens einer wegbegleitenden Person mit wenigstens einem mitgeführten Gegenstand erfolgt. Das Bestimmen eines wahrscheinlichen Zieles kann insbesondere auch den Ort berücksichtigen, von dem aus die Fahrt angetreten wird und/oder es kann vorgesehen sein, dass die Bestimmung eines wahrscheinlichen Zieles eine Uhrzeit und/oder einen Wochentag umfasst. So können die Ziel-Hypothesen nun noch mit den Ziel-Hypothesen aus anderen Heuristiken verknüpft werden, die aus dem Stand der Technik bekannt sind, beispielsweise kann die erfindungsgemäße Heuristik kombiniert werden mit der Erfassung eines aktuellen Ortes, einer Uhrzeit oder einem Wochentag, an oder zu dem die Fahrt angetreten wird.

Die Erfindung richtet sich weiterhin auf eine Zielerkennungseinheit zur Erkennung eines Zieles eines Fahrzeugs zur Ausführung eines Verfahrens, wie vorstehend mit weiteren Merkmalen und zugehörigen Vorteilen beschrieben, wobei die Zielerkennungseinheit ein Lesegerät zur Kommunikation mit wenigstens einem Gegenstand, beispielsweise mit einem RFID-Element im oder am Gegenstand, einem sogenannten Transponder, aufweist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine beispielhafte Ansicht eines Fahrzeugs mit im Fahrzeug vorhandenen Gegenständen, und im Fahrzeug ist eine Zielerkennungseinheit mit erfindungsgemäßen Funktionen gezeigt, und ein Lesegerät im Fahrzeug erfasst die im Fahrzeug vorhandenen Gegenstände sowie weitere Gegenstände außerhalb des Fahrzeugs,
- Fig. 2: zeigt die Situation des Fahrzeugs, das sich bereits von den Fahrzeugen entfernt hat, so dass nur noch wenige nicht im Fahrzeug vorhandene Gegenstände miterkannt werden,
- Fig. 3: das Fahrzeug nach Antritt einer Fahrt an ein Ziel, wobei die tatsächlich im Fahrzeug vorhandenen Gegenstände durch das Lesegerät der Zielerkennungseinheit identifiziert wurden und
- Fig. 4: eine diagrammartige Darstellung des Verfahrens mit einer Zielerkennungseinheit gemäß der vorliegenden Erfindung.

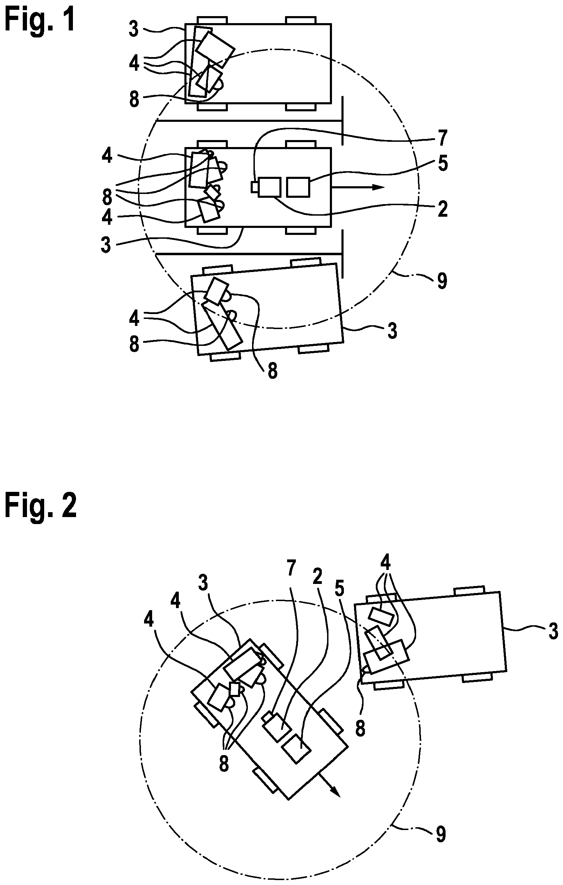

Die Figuren 1, 2 und 3 zeigen auf schematische Weise ein Fahrzeug 3, welches mit einer Zielerkennungseinheit 2 ausgestattet ist, und die Zielerkennungseinheit 2 dient zur Ausführung eines Verfahrens zur Bestimmung eines Zieles. Die Bestimmung beruht dabei auf einer Wahrscheinlichkeit, mit der ein Fahrer des Fahrzeugs 3 das Ziel anfahren wird. Das Fahrzeug 3 ist weiterhin gezeigt mit einem Navigationssystem 5, das mit der Zielerkennungseinheit 2 interagieren kann.

Die Zielerkennungseinheit 2 ist mit einem Lesegerät 7 ausgestattet, und das Lesegerät 7 ist dazu ausgebildet, RFID-Elemente 8 zu identifizieren, die an Gegenständen 4 befestigt sind. Dadurch kann die Zielerkennungseinheit 2 durch das Lesegerät 7 erkennen, welche Gegenstände 4 sich innerhalb eines Erkennungsradius 9 befinden.

Figur 1 zeigt das Fahrzeug 3 benachbart zu weiteren Fahrzeugen 3, und in sämtlichen Fahrzeugen 3 befinden sich Gegenstände 4. An den Gegenständen 4 sind RFID-Elemente 8 angeordnet, die über das Lesegerät 7 der Zielerkennungseinheit 2 erkannt werden können. Jedes RFID-Element 8 weist eine spezifische Kennung auf, und über die Kennung kann von der Zielerkennungseinheit 2 erkannt werden, um welchen Gegenstand 4 es sich handelt. Bei einem erstmaligen Auslesen der vorhandenen Gegenstände 4 durch die Zielerkennungseinheit 2 werden Gegenstände 4 erkannt, die auch in benachbarten Fahrzeugen 3 vorhanden sind. Die Anzahl der Gegenstände 4 wird zunächst zwischengespeichert, woraufhin der Fahrer des Fahrzeugs 3 die Fahrt antritt.

Figur 2 zeigt das Fahrzeug 3 in einer Position nach Antritt der Fahrt, die sich zu den benachbarten Fahrzeugen 3 gemäß Figur 1 bereits verändert hat. Die weiteren Gegenstände 4, die sich nicht im eigenen Fahrzeug 3 befinden, sondern im benachbarten Fahrzeug 3, sind nunmehr reduziert auf beispielsweise zwei Gegenstände 4, die noch innerhalb des Erkennungsradius 9 liegen.

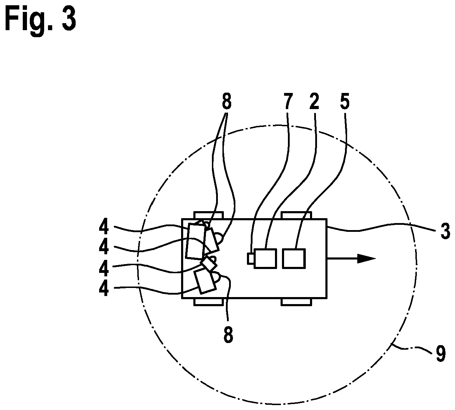

Figur 3 zeigt eine Situation des Fahrzeugs 3 ohne benachbarte Fahrzeuge 3, so dass sämtliche Gegenstände 4, die sich innerhalb des Erkennungsradius 9 des Lesegerätes 7 befinden, im eigenen Fahrzeug 3 angeordnet sind. Wird nun bei fortgeschrittenem Fahrtantritt nochmals eine Erkennung der Gegenstände 4 im Fahrzeug 3 vorgenommen, so werden folglich nur wiederum die tatsächlich mitgeführten Gegenstände 4 erfasst, wobei die Wahrscheinlichkeit steigt, dass wieder weitere Gegenstände, die neu erfasst werden, sich nicht im eigenen Fahrzeug befinden. Durch diesen Ausschlussalgorithmus kann schließlich die Ableitung auf die sich tatsächlich im eigenen Fahrzeug befindenden oder im Rucksack oder durch die Person mitgeführten Gegenstände vorgenommen werden.

Die Abfolge der Figuren 1, 2 und 3 zeigt, dass der erste Schritt des erfindungsgemäßen Verfahrens, nämlich das Erkennen wenigstens eines im Fahrzeug 3 mitgeführten Gegenstandes 4, mehrfach vorgenommen werden kann. Insbesondere kann die Erkennung durch das Lesegerät 7 mehrfach vorgenommen werden, während des Antritts einer Fahrt zu einem Ziel, so dass ein Vergleich der nach Fahrtantritt noch verbleibenden Gegenstände 4 im Fahrzeug 3 gegenüber den erstmalig erkannten Gegenständen 4 zeigt, welche Gegenstände 4 sich tatsächlich im Fahrzeug 3 befinden. Dieser Prozess kann auch einem Lernprozess zugeführt werden, so dass durch die Zielerkennungseinheit 2 regelmäßig erfasste Gegenstände 4 bei einem erstmaligen Erkennen, beispielsweise wenn das Fahrzeug 3 noch steht, diese aber nach Fahrtantritt regelmäßig nicht mehr im Fahrzeug 3 vorhanden sind, von vornherein ausschließen kann.

Im Fahrzeug befindet sich ein Navigationssystem 5, und die Bestimmung des wahrscheinlichen Zieles 1 durch die Zielerkennungseinheit 2 kann mit dem Navigationssystem 5 kommuniziert werden. Dieses kann daraufhin den Fahrer, ohne konkrete Fahranweisungen auszugeben, über beispielsweise aktuelle Verkehrsinformationen informieren, die auf der Fahrtroute liegen, die zum wahrscheinlichen Ziel führt.

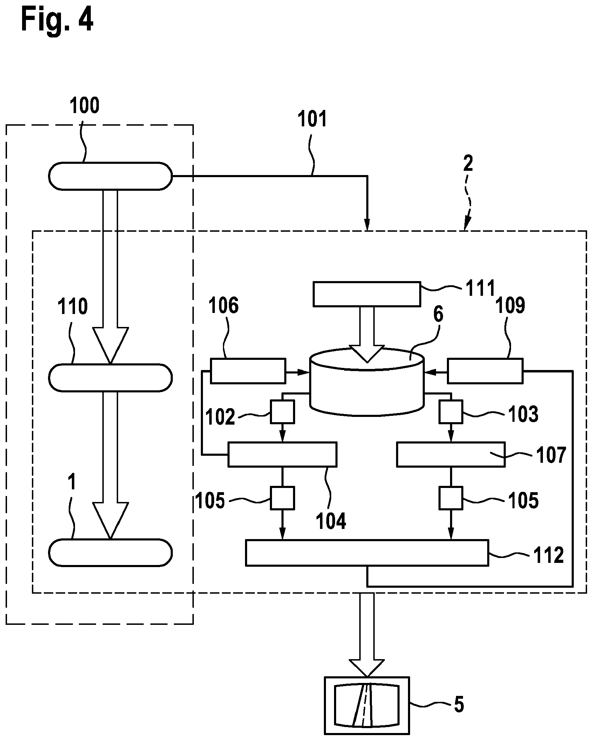

Figur 4 zeigt den Ablauf der Zielbestimmung in der Zielerkennungseinheit 2, und zunächst wird der Ablauf der Zielbestimmung beschrieben anhand eines Ablaufes der Fahrt. Der Fahrstart 100 wird als gleichzeitiger Beginn der Zielbestimmung genutzt, was durch eine Informationsübergabe 101 durch die Fahrzeugelektronik an die Zielerkennungseinheit 2 kommuniziert wird. Der Fahrstart 100 bildet dabei den Startzustand, und wird die Fahrt angetreten, so nimmt das Fahrzeug den Zustand der Fahrt 110 ein, welche schließlich bei Erreichen des Zieles 1 beendet wird.

Startet nun eine neue Fahrt, so bestimmt die Zielerkennungseinheit 2 zunächst alle im Fahrzeug befindlichen Gegenstände, wie in Zusammenhang mit den Figuren 1, 2 und 3 beschrieben. Das Erkennen des wenigstens einen im Fahrzeug 3 mitgeführten Gegenstandes 4 erfolgt durch die Gegenstandserfassung 111. Diese kommuniziert die aufgefundenen Gegenstände 4 mit einem Speicher 6, woraufhin geprüft wird, ob der Gegenstand 4 bereits in der Datenbank des Speichers 6 abgespeichert ist oder nicht. Für den Fall, dass die Kennung des Gegenstandes 4, die sogenannte ID, gefunden wurde, schematisch dargestellt mit dem Ergebnis ID-gefunden 102, kann eine Ziel-Hypothese 104 gestartet werden. Fährt der Fahrer das Fahrzeug 3 tatsächlich zum hypothetisch bestimmten Ziel 1, so erfolgt eine Zielanalyse 105, und stimmt das tatsächliche Ziel 1 mit dem hypothetisch bestimmten Ziel 1 überein, so kann das Ziel 1 mit dem gefundenen Gegenstand die Verknüpfung beibehalten, da diese stimmt.

Stimmt das hypothetisch ermittelte Ziel anhand der gefundenen ID gemäß Position 102 nicht mit dem tatsächlich angefahrenen Ziel 1 überein, so erfolgt ein Update 106, so dass im Speicher 6 das in Zusammenhang mit der gefundenen ID 102 angefahrene Ziel 1 in der Datenbank des Speichers 6 aktualisiert wird.

Für den Fall, dass sich ein neuer Gegenstand 4 im Fahrzeug 3 befindet, wird über die Gegenstandserfassung 111 eine ID in der Datenbank des Speichers 6 nicht gefunden, wie mit Position 103 gezeigt. Dies führt zu einer neuen ID 107, woraufhin eine Zielanalyse 105 vorgenommen wird, mit welchem das Ziel 1 und die neue ID 107 zu verknüpfen sind. Diese neue Verknüpfung wird über ein Update 109 von einem Analyse- und Verknüpfungsschritt 112 an die Datenbank 6 übermittelt.

Diese Ziel-Hypothesen sendet die erfindungsgemäße Zielerkennungseinheit 2 an das Navigationssystem 5, beispielsweise mittels CAN oder mittels anderer Übertragungswege oder anderen Komponenten. So können die wahrscheinlichen Ziele 104 zur Informationsbereitstellung an den Fahrer durch das Navigationssystem 5 genutzt werden, ohne dass der Fahrer des Fahrzeugs 3 das Navigationssystem 5 aktivieren muss. Im Ergebnis entsteht durch das Verfahren eine Annahme eines wahrscheinlichen Zieles 104 oder eine Liste an Zielen 104 mit zugehöriger Wahrscheinlichkeit. Durch die zusätzliche Verwendung der Gegenstandserfassung 111 ist damit die Trefferquote, mit der ein Ziel 1 angenommen wird, wesentlich höher als bei allgemeiner Nutzung von aus dem Stand der Technik bekannten Verfahren, beispielsweise basierend auf einer aktuellen Uhrzeit oder einem Wochentag.

Wird mit hoher Sicherheit ein Ziel 104 erkannt, und gleichzeitig festgestellt, dass ein Gegenstand 4 nicht mehr im Fahrzeug 3 vorhanden ist, welcher sonst immer bei der Fahrt zu diesem Ziel 1 vorhanden war, kann bei dem Fahrer beispielsweise durch das Navigationssystem 5 nachgefragt werden, ob alle Gegenstände 4 vorhanden sind. Fehlt beispielsweise bei einer Fahrt zur Arbeitsstätte ein Werksausweis, so kann aus der automatischen Erkennung des Zieles 1 frühzeitig das Fehlen des Werksausweises erkannt und an den Fahrer kommuniziert werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten oder räumlichen Anordnungen, können sowohl für sich als auch in den verschiedensten Kombinationen erfindungswesentlich sein, wobei der Schutzbereich der Erfindung durch die Ansprüche definiert ist.

## Patentansprüche

1. Verfahren zur Bestimmung eines Zieles (1) einer Person mittels einer Zielerkennungseinheit (2), wobei die Bestimmung auf einer Wahrscheinlichkeit beruht, mit der die Person (3) das Ziel (1) ansteuert, und wobei das Verfahren wenigstens die folgenden Schritte aufweist:
- Mehrfaches Erkennen wenigstens eines durch die Person (3) mitgeführten Gegenstandes (4),
- Vergleich der nach Antritt einer Fortbewegung bei der Person verbleibenden Gegenstände (4) gegenüber den erstmalig erkannten Gegenständen (4),
- Ausschließen von in einem Lernprozess regelmäßig erfassten Gegenständen (4) bei einem erstmaligen Erkennen, die aber nach Antritt der Fortbewegung nicht mehr bei der Person verblieben sind,
- Bestimmen des wahrscheinlichen Zieles (1) aus dem wenigstens einen erkannten Gegenstand (4).

2. Verfahren nach Anspruch 1, **dadurch gekennzeichnet, dass** das wahrscheinliche Ziel (1) in Zusammenhang mit wenigstens einem in dem Fahrzeug (3), in einem Gepäck oder allgemein mit der Person mitgeführten Gegenstand (4), insbesondere mit einem neuen Gegenstand (4), durch die Zielerkennungseinheit (2) angelernt wird.

3. Verfahren nach Anspruch 1 oder 2, **dadurch gekennzeichnet, dass** ein Navigationssystem (5) bereitgestellt wird, wobei die Bestimmung des wahrscheinlichen Ziels (1) durch eine Interaktion der Zielerkennungseinheit (2) mit dem Navigationssystem (5) erfolgt.

4. Verfahren nach einem der Ansprüche 1 bis 3, **dadurch gekennzeichnet, dass** das Erkennen des wenigstens einen durch die Person (3) mitgeführten Gegenstandes (4) mittels einer Abfrage eines RFID - Elementes (8) im oder am Gegenstand (4) oder mittels einer Kamera erfolgt, wobei die Abfrage wenigstens ein- und vorzugsweise mehrfach ausgeführt wird, insbesondere wenn die Fahrt bereits angetreten wurde.

5. Verfahren nach einem der vorgenannten Ansprüche, **dadurch gekennzeichnet, dass** die Bestimmung des wahrscheinlichen Zieles (1) das Erfassen wenigstens einer weiteren wegbegleitenden Person, insbesondere einem weiteren Insassen in einem Fahrzeug, mit einschließt.

6. Verfahren nach einem der vorgenannten Ansprüche, **dadurch gekennzeichnet, dass** das Anlernen von wahrscheinlichen Zielen (1) weiterhin Zwischenziele (1) umfasst, die auf oder innerhalb einer Route liegen.

7. Verfahren nach einem der vorgenannten Ansprüche, **dadurch gekennzeichnet, dass** das Anlernen von wahrscheinlichen Zielen (1) und insbesondere von Zwischenzielen (1) darauf basiert, dass mit der Entnahme eines Gegenstandes (4) aus dem Fahrzeug (3) ein Ziel (1) oder ein Zwischenziel (1) verknüpft und in einem Speicher (6) abgespeichert wird.

8. Verfahren nach einem der vorgenannten Ansprüche, **dadurch gekennzeichnet, dass** das Bestimmen eines Zieles (1) auf der Kombination mehrerer Gegenstände (4) und/oder auf der Kombination wenigstens einer weiteren Person, insbesondere eines weiteren Insassen in einem Fahrzeug, mit wenigstens einem mitgeführten Gegenstand (4) erfolgt.

9. Verfahren nach einem der vorgenannten Ansprüche, **dadurch gekennzeichnet, dass** das Bestimmen eines wahrscheinlichen Zieles (1) den Ort berücksichtigt, von dem aus die Fahrt angetreten wird und/oder dass die Bestimmung eines wahrscheinlichen Zieles (1) eine Uhrzeit und/oder einen Wochentag umfasst.

10. Zielerkennungseinheit (2) zur Erkennung eines Zieles (1) zur Ausführung eines Verfahrens nach einem der Ansprüche 1 bis 9, aufweisend ein Lesegerät (7) zur Kommunikation mit wenigstens einem Gegenstand (4).

## Claims

1. Method for determining a destination (1) of a person by means of a destination detection unit (2), wherein the determination is based on a likelihood of the person (3) moving towards the destination (1), and wherein the method has at least the following steps:
- detecting at least one object (4), which is carried by the person (3), multiple times,
- comparing the objects (4) remaining with the person after the start of a movement with the objects (4) that were detected first,
- excluding, in a first detection, objects (4) that were captured regularly in a learning process but are no longer with the person after the start of the movement,
- determining the likely destination (1) from the at least one detected object (4).

2. Method according to Claim 1, **characterized in that** the likely destination (1) is learned on the part of the destination detection unit (2) in connection with at least one object (4) that is carried along in the vehicle (3), in a piece of luggage or generally with the person, in particular in connection with a new object (4).

3. Method according to Claim 1 or 2, **characterized in that** a navigation system (5) is provided, wherein the determination of the likely destination (1) is effected by interaction of the destination detection unit (2) with the navigation system (5).

4. Method according to one of Claims 1 to 3, **characterized in that** the detection of the at least one object (4) carried by the person (3) is effected by means of interrogating an RFID element (8) in or at the object (4) or by means of a camera, wherein the interrogation is carried out at least once and preferably multiple times, in particular after the journey has already started.

5. Method according to one of the preceding claims, **characterized in that** the determination of the likely destination (1) includes capturing at least one further accompanying person, in particular a further occupant in a vehicle.

6. Method according to one of the preceding claims, **characterized in that** the learning of likely destinations (1) furthermore comprises intermediate destinations (1) located along or in a route.

7. Method according to one of the preceding claims, **characterized in that** the learning of likely destinations (1) and in particular of intermediate destinations (1) is based on a destination (1) or an intermediate destination (1) being linked to the removal of an object (4) from the vehicle (3) and being stored in a memory (6) .

8. Method according to one of the preceding claims, **characterized in that** the determination of a destination (1) is effected based on the combination of a plurality of objects (4) and/or on the combination of at least one further person, in particular a further occupant in a vehicle, with at least one object (4) that is carried along.

9. Method according to one of the preceding claims, **characterized in that** the determination of a likely destination (1) takes into account the location at which the journey is started and/or **in that** the determination of a likely destination (1) comprises a time and/or a day of the week.

10. Destination detection unit (2) for detecting a destination (1) for carrying out a method according to one of Claims 1 to 9, having a read unit (7) for communicating with at least one object (4).

## Revendications

1. Procédé permettant de déterminer une destination (1) d'une personne au moyen d'une unité de reconnaissance de destination (2), la détermination étant basée sur une probabilité selon laquelle la personne (3) se dirige vers la destination (1), et le procédé présentant au moins les étapes suivantes consistant à :
- reconnaître plusieurs fois au moins un objet (4) transporté par la personne (3),
- comparer les objets (4) restant chez la personne après le début d'un déplacement par rapport aux objets (4) reconnus initialement,
- exclure lors d'une reconnaissance initiale des objets (4) détectés régulièrement au cours d'un processus d'apprentissage mais qui ne sont plus restés chez la personne après le début du déplacement,
- déterminer la destination probable (1) à partir de l'au moins un objet (4) reconnu.

2. Procédé selon la revendication 1, **caractérisé en ce que** l'unité de reconnaissance de destination (2) apprend la destination probable (1) en relation avec au moins un objet (4) transporté dans le véhicule (3), dans un bagage ou d'une manière générale par la personne, en particulier avec un nouvel objet (4).

3. Procédé selon la revendication 1 ou 2, **caractérisé en ce qu'**un système de navigation (5) est fourni, dans lequel la détermination de la destination probable (1) est effectuée par une interaction de l'unité de reconnaissance de destination (2) avec le système de navigation (5).

4. Procédé selon l'une quelconque des revendications 1 à 3, **caractérisé en ce que** la reconnaissance de l'au moins un objet (4) transporté par la personne (3) est effectuée au moyen d'une interrogation d'un élément RFID (8) dans ou sur l'objet (4) ou au moyen d'une caméra, l'interrogation étant effectuée au moins une fois et de préférence plusieurs fois, en particulier lorsque la course a déjà commencé.

5. Procédé selon l'une quelconque des revendications précédentes, **caractérisé en ce que** la détermination de la destination probable (1) comprend aussi la détection d'au moins une autre personne d'accompagnement, en particulier d'un autre passager dans un véhicule.

6. Procédé selon l'une quelconque des revendications précédentes, **caractérisé en ce que** l'apprentissage de destinations probables (1) comprend en outre des destinations intermédiaires (1) qui se trouvent sur ou à l'intérieur d'un trajet.

7. Procédé selon l'une quelconque des revendications précédentes, **caractérisé en ce que** l'apprentissage de destinations probables (1), et en particulier de destinations intermédiaires (1), est basé sur le fait que le prélèvement d'un objet (4) du véhicule (3) est associé à une destination (1) ou à une destination intermédiaire (1) et stocké dans une mémoire (6).

8. Procédé selon l'une quelconque des revendications précédentes, **caractérisé en ce que** la détermination d'une destination (1) est effectuée sur la base de la combinaison de plusieurs objets (4) et/ou de la combinaison d'au moins une autre personne, en particulier d'un autre passager dans un véhicule, avec au moins un objet transporté (4).

9. Procédé selon l'une quelconque des revendications précédentes, **caractérisé en ce que** la détermination d'une destination probable (1) tient compte du lieu où commence la course, et/ou **en ce que** la détermination d'une destination probable (1) comprend une heure et/ou un jour de la semaine.

10. Unité de reconnaissance de destination (2) permettant de reconnaître une destination (1) pour effectuer un procédé selon l'une quelconque des revendications 1 à 9, présentant un appareil de lecture (7) pour la communication avec au moins un objet (4).
